# FASCICULE DE BREVET EUROPEEN

(11) **EP 3 526 420 B1**
(45) Date de publication et mention de la délivrance du brevet: **26.08.2020**
(21) Numéro de dépôt: 17787231.4
(22) Date de dépôt: 03.10.2017
(51) Int. Cl.: E04F 13/00, E04F 10/06, F16B 5/06, G09F 15/00, G09F 19/22

(54) **SYSTÈME DE TOILE TENDUE ENTRE DEUX POUTRES**
ZWISCHEN ZWEI TRÄGERN GESPANNTE PLANE
CANVAS SYSTEM STRETCHED BETWEEN TWO BEAMS

(30) Priorité: 11.10.2016 FR 1659801
(43) Date de publication de la demande: 21.08.2019
(73) Titulaire: Blanc-Beauregard, Philippe, 75008 Paris (FR)
(72) Inventeur: Blanc-Beauregard, Philippe, 75008 Paris (FR)
(74) Mandataire: Chevalier, Renaud Philippe
(86) Numéro de dépôt international: PCT/FR2017/052720
(87) Numéro de publication internationale: WO 2018/069602

(56) Documents cités:
- EP-A1- 1 191 506
- EP-A2- 0 333 907
- DE-A1- 4 113 725
- US-B2- 7 644 749

## Description

La présente invention concerne un système de toile comportant une toile prévue pour être tendue dans un plan vertical, ainsi qu'un procédé de montage d'une toile mettant en œuvre un tel système. Le document US 7 644 749 B2 décrit un système de toile selon le préambule de la revendication 1.

Il est connu de tendre des toiles dans un plan vertical sur des supports de grandes dimensions comme des façades de bâtiment ou des poteaux, pour diverses raisons comme la réalisation d'un affichage commercial, d'une couverture provisoire pendant des travaux sur le bâtiment, ou pour tout autre type de raison comme par exemple l'installation d'un écran géant.

Les toiles peuvent présenter des grandes dimensions, notamment plusieurs mètres de longueur et de hauteur. En particulier on peut réaliser des grandes toiles présentant une longueur de 10 à 20m, et une hauteur de 5 à 10m. Les toiles peuvent en particulier présenter des dessins ou des marquages, à des fins esthétiques ou publicitaires.

Ce type de toile de grandes dimensions présentant un encombrement et une masse importantes, peu facile à manœuvrer par des opérateurs se trouvant en hauteur sur un moyen de levage, pose des problèmes d'installation sur le support, et de mise en tension régulière afin d'obtenir un bel aspect évitant des plis.

La tension régulière d'une toile présentant une certaine élasticité à cause de ses grandes dimensions, est importante aussi pour éviter des vibrations et des claquements lors de vents importants, qui pourraient user la toile et entraîner des endommagements.

La présente invention a notamment pour but d'éviter ces inconvénients de la technique antérieure.

Elle propose à cet effet un système de toile tendue comportant une toile, ainsi qu'une poutre supérieure et une poutre inférieure prévues pour recevoir le sommet et la base de cette toile, ce système étant remarquable en ce que la poutre inférieure comporte une rainure horizontale inférieure présentant dans sa section transversale une ouverture de largeur réduite, la toile comportant à sa base un bourrelet inférieur pouvant s'insérer dans la rainure horizontale inférieure en l'introduisant radialement à l'intérieur par son ouverture, et en ce qu'il comporte un profilé de blocage prévu pour se glisser longitudinalement dans la rainure horizontale inférieure à partir d'une de ses extrémités, après avoir introduit dans cette rainure le bourrelet inférieur.

Un avantage de ce système de toile est que les opérateurs peuvent facilement fixer en premier le sommet de la toile sur la poutre supérieure, en laissant libre la base de cette toile qui pend. Ensuite les opérateurs insèrent de manière simple le bourrelet inférieur de la toile sur toute sa longueur, dans la rainure horizontale inférieure par son ouverture laissant passer ce bourrelet.

Enfin les opérateurs insèrent le profilé de blocage à une extrémité de la rainure horizontale inférieure, et le font glisser sur toute la longueur de cette rainure afin de bloquer le bourrelet dans la rainure en occupant un espace qui interdit à ce bourrelet de ressortir par l'ouverture. On installe de manière simple, rapide et sans risque une toile comportant sa base maintenue de manière régulière et continue sur la poutre inférieure.

On peut réaliser ensuite en particulier une tension de la toile horizontale sur les deux poutres, et verticale dans une direction transversale, notamment par un mouvement vertical d'une des deux poutres.

Le système de toile selon l'invention peut comporter de plus une ou plusieurs des caractéristiques suivantes, qui peuvent être combinées entre elles.

Avantageusement, le profilé de blocage comporte une section transversale présentant une largeur supérieure à celle de l'ouverture de la rainure horizontale inférieure. On n'a alors pas de risque de voir le profilé ressortir vers l'avant par cette ouverture.

Avantageusement, le profilé de blocage comporte dans sa section transversale une languette prévue pour sortir par l'ouverture de la rainure horizontale inférieure. Cette languette permet à un opérateur de tirer sur l'extrémité avant du profilé pour le faire coulisser dans la rainure horizontale inférieure.

Selon un mode de réalisation, le profilé de blocage comporte dans sa section transversale une forme tubulaire comprenant une ouverture longitudinale disposée radialement, prévue pour recevoir à l'intérieur le bourrelet inférieur.

Avantageusement, la poutre supérieure comporte une rainure horizontale supérieure présentant une ouverture de largeur réduite, prévue pour recevoir un bourrelet supérieur de la toile.

Dans ce cas, le bourrelet supérieur comporte avantageusement une section transversale présentant une largeur supérieure à celle de l'ouverture de la rainure horizontale supérieure. On peut ainsi glisser longitudinalement le bourrelet supérieur dans la rainure supérieure par son extrémité, pour suspendre la toile sans risquer de la voire tomber.

Selon un mode de réalisation, la poutre supérieure et la poutre inférieure comportent un dispositif de précontrainte horizontale de la toile. On réalise facilement de cette manière une tension horizontale de la toile.

En particulier, le dispositif de précontrainte horizontale peut comporter un coulisseau longitudinal engagé dans une rainure de la poutre, et une vis de tension horizontale prenant appui sur cette poutre pour déplacer ce coulisseau.

En complément, le système de toile peut comporter un dispositif de tension verticale de la toile. De la même manière on réalise facilement une tension verticale de la toile.

En particulier, le dispositif de tension verticale peut comporter des coulisseaux verticaux intercalés entre une poutre et des supports fixes de cette poutre.

L'invention a aussi pour objet un procédé de montage d'une toile d'un système de toile selon l'une quelconque des revendications 1 à 10, qui comporte une étape d'introduction du bourrelet inférieur de la toile dans la rainure horizontale inférieure en l'introduisant radialement à l'intérieur par son ouverture, puis une étape de glissement longitudinal du profilé de blocage dans cette rainure.

L'invention sera mieux comprise et d'autres caractéristiques et avantages apparaîtront plus clairement à la lecture de la description ci-après, donnée à titre d'exemple en référence aux dessins annexés dans lesquels :
- la figure 1 est une vue de côté d'un système de toile selon l'invention, comportant la toile fixée sur la poutre supérieure ;
- la figure 2 est une vue de face de la partie gauche de ce système de toile, présentant une première étape de mise en place de la toile sur la poutre supérieure ;
- la figure 3 présente successivement en vue de face et en vue de dessus une extrémité de la poutre supérieure comportant un système de tension horizontale ;
- la figure 4 présente une étape suivante de tension horizontale du bord supérieur de la toile ;
- la figure 5 est une coupe transversale de la poutre inférieure comportant le bourrelet de la base de la toile ainsi que le profilé de blocage insérés dans la rainure inférieure ;
- la figure 5a présente en coupe transversale une variante du profilé de blocage inséré dans une rainure inférieure circulaire ;
- la figure 6 présente une étape suivante de glissement du profilé de blocage dans la rainure de la poutre inférieure ;
- la figure 7 est une vue de côté du système de toile comportant la toile fixée sur la poutre supérieure et la poutre inférieure ; et
- la figure 8 présente une étape suivante de tension verticale de la toile.

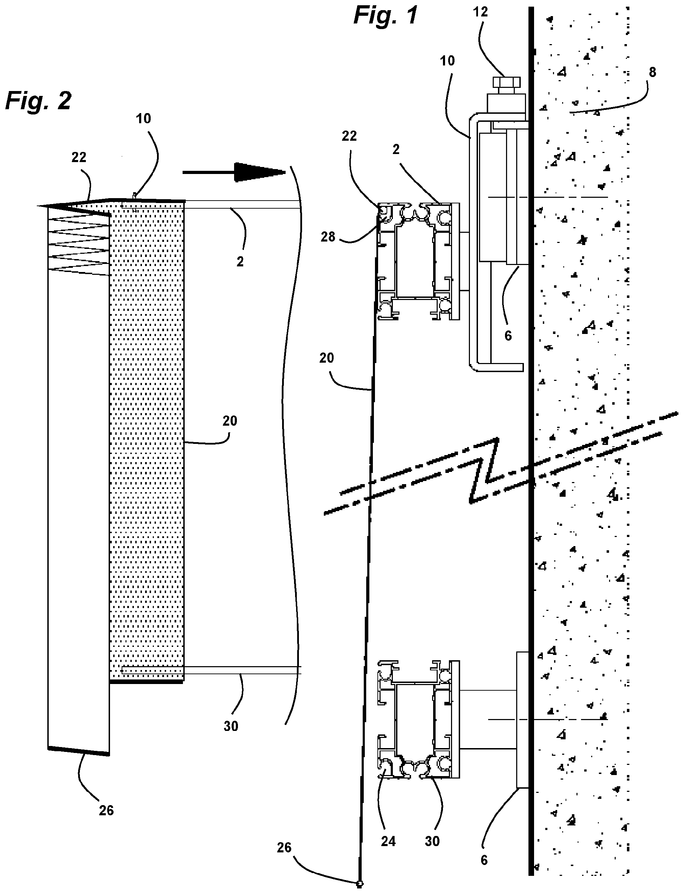

La figure 1 présente une poutre supérieure 2 formée par un profilé en alliage d'aluminium, présentant un contour rectangulaire disposé verticalement, comprenant sur ses faces différentes rainures horizontales de fixation.

En variante la toile 2 peut présenter une inclinaison différente de la verticale. Par convention la direction appelée verticale englobe toutes les inclinaisons possibles, la direction perpendiculaire étant appelée direction horizontale.

La face arrière de la poutre supérieure 2 est fixée par ses rainures arrière sur une série de coulisseaux verticaux 10 régulièrement espacés dans la direction horizontale.

Chaque coulisseau 10 est monté sur un support mural 6 fixé sur la façade d'un bâtiment 8, en permettant un coulissement vertical réglé par une vis de tension verticale 12 disposée sur le dessus, qui réalise un réglage individuel de la hauteur du coulisseau par rapport à ce support mural.

La face avant de la poutre supérieure 2 comporte vers le haut une rainure horizontale supérieure 28 présentant une ouverture de largeur réduite, recevant de manière ajustée un bourrelet supérieur 22 formé le long du bord supérieur d'une toile 20.

La base de la toile 20 comporte sur sa longueur un bourrelet inférieur circulaire 26 présentant un diamètre plus petit que celui du bourrelet supérieur 22.

Une poutre inférieure 30 présentant un profilé identique à celui de la poutre supérieure 2, qui est montée de manière symétrique par rapport à un plan horizontal, comporte sa face arrière fixée sur des supports muraux 6 régulièrement espacés, ne comprenant pas de réglage en hauteur.

La figure 2 présente la mise en place de la poutre supérieure 2 sur une façade 8 par l'intermédiaire des coulisseaux verticaux 10 fixés chacun sur son support mural 6, et de la poutre inférieure 30 directement fixée sur ses supports muraux. Les coulisseaux verticaux 10 sont réglés pour disposer la poutre supérieure 2 dans sa position la plus basse.

Un opérateur introduit ensuite le départ du bourrelet supérieur 22 de la toile 20 dans une extrémité de la rainure supérieure 28 de la poutre supérieure 2, puis fait glisser le bourrelet dans cette rainure le long du profilé pour l'emmener jusqu'au bout. Le diamètre du bourrelet supérieur 22 est prévu pour qu'il ne puisse pas sortir par l'ouverture avant de la rainure supérieure 28, ce qui maintient en place la toile 20 dès l'introduction de son bourrelet sur la poutre supérieure 2.

La toile 20 peut être roulée au départ suivant un axe vertical, l'introduction du bourrelet supérieur 22 se faisant en déroulant au fur et à mesure cette toile ce qui permet un maintien de la toile restante ainsi qu'une mise en place facile et rapide avec un nombre de personnes réduit.

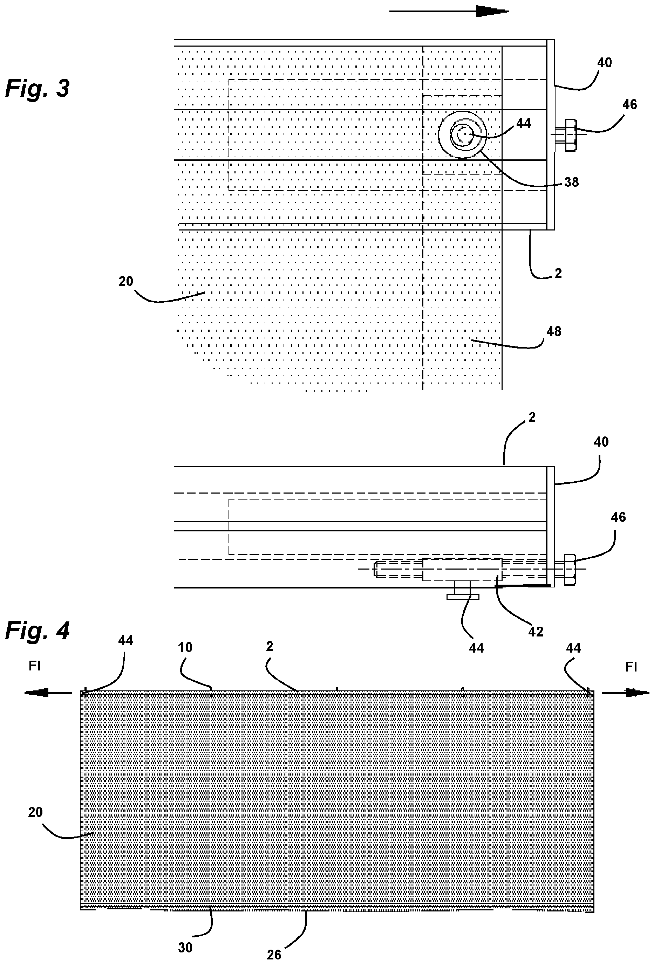

La figure 3 présente l'extrémité droite de la poutre supérieure 2, comportant dans une rainure centrale de la face avant un coulisseau longitudinal 42 recevant une vis de tension longitudinale 46 qui est vissée dans un perçage taraudé d'une plaque d'extrémité 40. Le coulisseau longitudinal 42 comporte vers l'avant un plot circulaire 44 dépassant de la face avant de la poutre supérieure 2, qui est fixé sur une tige de diamètre réduit.

On dispose sur l'autre extrémité de la poutre supérieure 2 un plot 44 similaire qui est fixe, ou mobile avec un coulisseau longitudinal 42.

Chaque bord vertical de la toile 20 comporte un ourlet 48 présentant en partie supérieure un œillet 38. Les œillets 38 sont engagés sur leur plot 44, en s'accrochant derrière ce plot afin d'éviter un décrochement accidentel.

La figure 4 présente la toile 20 dont les deux extrémités supérieures ont été fixées sur les plots 44 disposés de chaque côté de la poutre supérieure 2.

On procède ensuite d'un seul côté ou des deux à une précontrainte horizontale supérieure de la toile 20, en serrant les vis de tension longitudinale 46 de la poutre supérieure 2 qui délivrent une force longitudinale FI.

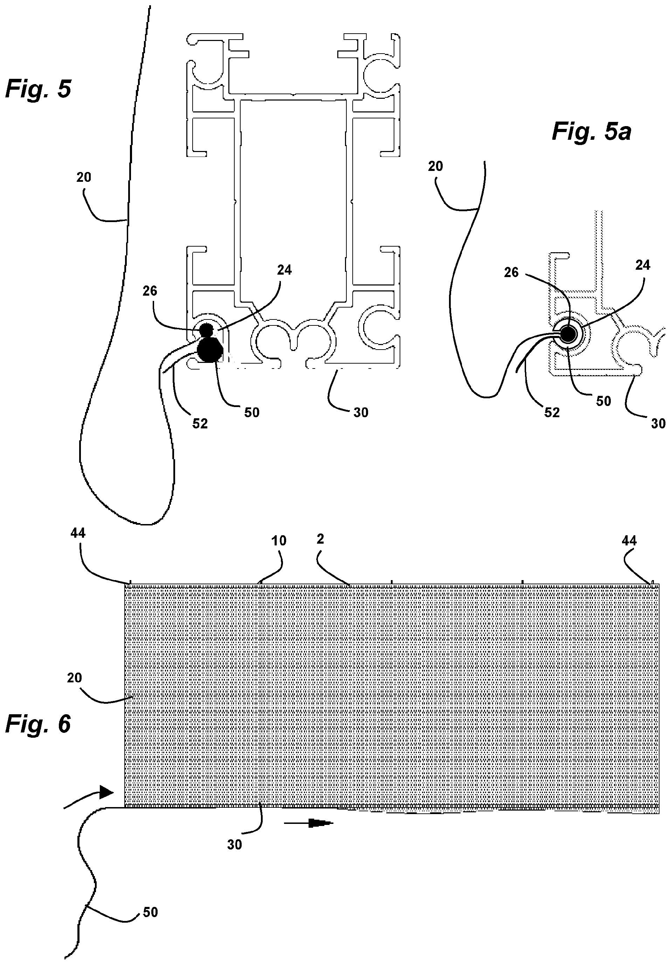

La figure 5 présente la poutre inférieure 30 comportant en bas de sa face avant la rainure horizontale inférieure 24 qui a reçu le bourrelet inférieur 26 de la toile 20, présentant un petit diamètre lui permettant de passer dans l'ouverture avant de cette rainure. Cette opération d'introduction du bourrelet inférieur 26 dans la rainure inférieure 24 se fait facilement par un opérateur, qui le pousse vers l'arrière pour l'introduire dans l'ouverture de cette rainure.

Un profilé de blocage 50 comporte un diamètre permettant d'occuper une grande partie de la section disponible à côté du bourrelet inférieur 26, et une languette radiale continue 52 fixée sur cette partie circulaire, sortant vers l'extérieur par l'ouverture de la rainure 24.

La figure 5a présente la poutre inférieure 30 qui a été retournée pour mettre en avant sa face arrière comprenant une rainure inférieure 24 ouverte vers l'avant, comportant une section circulaire.

Le bourrelet inférieur circulaire 26 de la toile 20 présente un petit diamètre identique à celui présenté figure 5. Le profilé de blocage 50 a une forme tubulaire de section circulaire présentant un diamètre extérieur sensiblement ajusté dans la rainure inférieure 24, qui comporte une fente longitudinale dirigée radialement, comprenant sur un côté une languette radiale continue 52 sortant vers l'extérieur par l'ouverture de la rainure.

La figure 6 présente une étape suivante de glissement du profilé de blocage 50 par une extrémité de la rainure inférieure 24.

Pour la version présentée figure 5, le profilé de blocage 50 venant en dessous du bourrelet inférieur 26, comporte un diamètre permettant d'occuper une grande partie de la section disponible à côté de ce bourrelet.

Pour la version présentée figure 5a, le profilé de blocage 50 vient autour du bourrelet inférieur 26, en remplissant l'espace radial entre ce bourrelet et le contour de la rainure 24. La toile 20 passe par la fente radiale du profilé de blocage 50.

On notera que dans les deux cas, le profilé de blocage 50 présente un diamètre supérieur à la largeur de l'ouverture de la rainure inférieure 24, de manière à ne pas pouvoir ressortir de cette rainure par son ouverture tournée vers l'avant.

La languette continue 52 ressortant de la rainure inférieure 24 par son ouverture avant, fixée sur la partie circulaire du profilé de blocage 50, permet à un opérateur de tenir l'extrémité avant de ce profilé pour le tirer le long de cette rainure. De cette manière le coulissement est simple et rapide à effectuer, sans risquer un blocage qui pourrait se produire si on devait pousser le profilé de blocage 50 dans la rainure inférieure 24.

L'introduction du profilé de blocage 50 occupant la place disponible dans la rainure inférieure 24, empêche toute sortie du bourrelet inférieur 26 par l'ouverture de cette rainure. On réalise de manière simple et sécurisée un blocage continu de la base de la toile 20 sur la poutre inférieure 30.

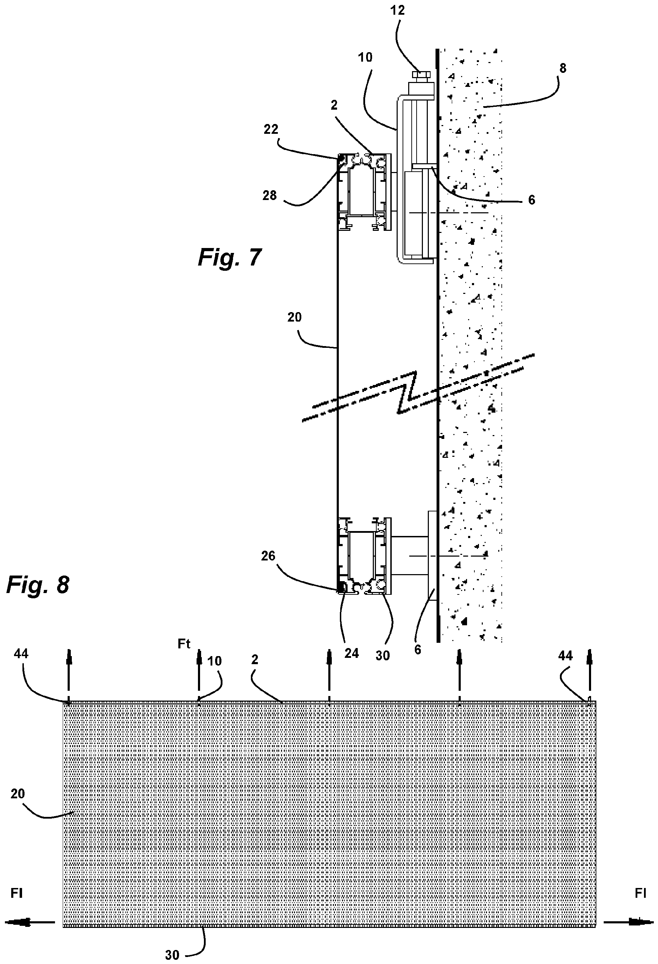

Les figures 7 et 8 présentent la poutre inférieure 30 comportant aux extrémités comme sur la poutre supérieure 2, des plots 44 dont au moins un est monté sur un coulisseau longitudinal 42. On effectue une précontrainte horizontale inférieure de la toile 20, en serrant les vis de tension longitudinale 46 de la poutre inférieure 30 qui délivrent une force horizontale FI.

On réalise ensuite une tension verticale de la toile en remontant l'ensemble de la poutre supérieure 2, grâce à un serrage des vis de tension verticale 12 disposées sur chaque coulisseau 10 supportant cette poutre, délivrant chacune une force verticale Ft.

On effectue de manière simple un serrage progressif et équilibré des vis de tension 12 de tous les coulisseaux 10, afin d'obtenir une tension verticale de la toile 20 qui soit régulière sur toute sa longueur.

Grâce à une raideur suffisante des poutres supérieure 2 et inférieure 30, évitant dans le plan vertical des flexions de ces poutres fixées ponctuellement sur les fixations murales 6, et à l'accrochage continu de la toile 20 sur ces poutres, on obtient une tension verticale de cette toile qui est régulièrement répartie sur toute la longueur.

On obtient de manière simple, rapide et sécurisé, avec un nombre de personnes réduit, un montage d'une toile 20 qui peut présenter des grandes dimensions, en particulier une longueur supérieure à 15m et une hauteur supérieure à 5m.

La toile 20 est parfaitement tendue dans toutes les directions par un réglage simple, comprenant d'abord une mise en précontrainte des bords supérieur et inférieur, puis une tension verticale. Des essais ont montré que cet ordre particulier des opérations donne facilement une tension parfaite de la toile dans toutes les directions. On peut en plus vérifier périodiquement la tension de la toile, qui pourrait se détendre progressivement par une certaine détente de son tissu, en agissant simplement sur les vis de tension longitudinale 46 et verticale 12.

## Revendications

1. Système de toile tendue comportant une toile (20), ainsi qu'une poutre supérieure (2) et une poutre inférieure (30) prévues pour recevoir respectivement le sommet et
la base de cette toile, la poutre inférieure (30) comportant
une rainure horizontale inférieure (24) présentant dans sa section transversale une ouverture de largeur réduite, la toile (20) comportant à sa base un bourrelet inférieur (26) pouvant s'insérer dans la rainure horizontale inférieure (24) en l'introduisant radialement à l'intérieur par son ouverture,
**caractérisé en ce que** le système de toile tendue
comporte un profilé de blocage (50) prévu pour se glisser horizontalement dans la rainure horizontale inférieure (24) à partir d'une de ses extrémités, après avoir introduit dans cette rainure le bourrelet inférieur (26).

2. Système de toile selon la revendication 1, **caractérisé en ce que** le profilé de blocage (50) comporte une section transversale présentant une largeur supérieure à celle de l'ouverture de la rainure horizontale inférieure (24).

3. Système de toile selon la revendication 1 ou 2, **caractérisé en ce que** le profilé de blocage (50) comporte dans sa section transversale une languette (52) prévue pour sortir par l'ouverture de la rainure horizontale inférieure (24).

4. Système de toile selon l'une quelconque des revendications précédentes, **caractérisé en ce que** le profilé de blocage (50) comporte dans sa section transversale une forme tubulaire comprenant une ouverture longitudinale disposée radialement, prévue pour recevoir à l'intérieur le bourrelet inférieur (26).

5. Système de toile selon l'une quelconque des revendications précédentes, **caractérisé en ce que** la poutre supérieure (2) comporte une rainure horizontale supérieure (28) présentant une ouverture de largeur réduite, prévue pour recevoir un bourrelet supérieur (22) de la toile (20).

6. Système de toile selon la revendication 5, **caractérisé en ce que** le bourrelet supérieur (22) comporte une section transversale présentant une largeur supérieure à celle de l'ouverture de la rainure horizontale supérieure (28).

7. Système de toile selon l'une quelconque des revendications précédentes, **caractérisé en ce que** la poutre supérieure (2) et la poutre inférieure (30) comportent un dispositif de précontrainte horizontale de la toile (2).

8. Système de toile selon la revendication 7, **caractérisé en ce que** le dispositif de précontrainte horizontale comporte un coulisseau longitudinal (42) engagé dans une rainure de la poutre (2, 30), et une vis de tension horizontale (46) prenant appui sur cette poutre pour déplacer ce coulisseau.

9. Système de toile selon l'une quelconque des revendications précédentes, **caractérisé en ce qu'**il comporte un dispositif de tension verticale de la toile (2).

10. Système de toile selon la revendication 9, **caractérisé en ce que** le dispositif de tension verticale comporte des coulisseaux verticaux (10) intercalés entre une poutre (2, 30) et des supports fixes (6).

11. Procédé de montage d'une toile (2) d'un système de toile selon l'une quelconque des revendications précédentes, **caractérisé en ce qu'**il comporte une étape d'introduction du bourrelet inférieur (26) de la toile (20) dans la rainure horizontale inférieure (24) en l'introduisant radialement à l'intérieur par son ouverture, puis une étape de glissement longitudinal du profilé de blocage (50) dans cette rainure.

## Claims

1. A stretched canvas system including a canvas (20), as well as an upper beam (2) and a lower beam (30) intended to respectively receive the top and the base of this canvas, the lower beam (30) including a lower horizontal groove (24) having in its cross-section an opening with a reduced width, the canvas (20) including at its base a lower bead (26) adapted to be inserted into the lower horizontal groove (24) by fitting it radially thereinside through the opening thereof, **characterized in that** the stretched canvas system includes a blocking profile (50) intended to slide horizontally within the lower horizontal groove (24) starting from one of the ends thereof, after having fitted the lower bead (26) into this groove.

2. The canvas system according to claim 1, **characterized in that** the blocking profile (50) includes a cross-section having a width larger than that of the opening of the lower horizontal groove (24).

3. The canvas system according to claim 1 or 2, **characterized in that** the blocking profile (50) includes in its cross-section a tab (52) intended to emerge through the opening of the lower horizontal groove (24).

4. The canvas system according to any one of the preceding claims, **characterized in that** the blocking profile (50) includes in its cross-section a tubular shape comprising a longitudinal opening disposed radially, intended to receive the lower bead (26) thereinside.

5. The canvas system according to any one of the preceding claims, **characterized in that** the upper beam (2) includes an upper horizontal groove (28) having an opening with a reduced width, intended to receive an upper bead (22) of the canvas (20).

6. The canvas system according to claim 5, **characterized in that** the upper bead (22) includes a cross-section having a width larger than that of the opening of the upper horizontal groove (28).

7. The canvas system according to any one of the preceding claims, **characterized in that** the upper beam (2) and the lower beam (30) include a device for horizontally pre-stressing the canvas (20).

8. The canvas system according to claim 7, **characterized in that** the horizontal pre-stressing device includes a longitudinal slide (42) engaged within a groove of the beam (2, 30), and a horizontal tensioning screw (46) bearing on this beam so as to displace this slide.

9. The canvas system according to any one of the preceding claims, **characterized in that** it includes a device for vertically tensioning the canvas (20).

10. The canvas system according to claim 9, **characterized in that** the vertical tensioning device includes vertical slides (10) interposed between one beam (2, 30) and fixed supports (6).

11. A method for mounting a canvas (20) of a canvas system according to any one of the preceding claims, **characterized in that** it includes a step of fitting the lower bead (26) of the canvas (20) into the lower horizontal groove (24) by fitting it radially thereinside through the opening thereof, and then a step of longitudinally sliding the blocking profile (50) into this groove.

## Patentansprüche

1. Spannplanensystem, das eine Plane (20), sowie einen oberen Träger (2) und einen unteren Träger (30) beinhaltet, die vorgesehen sind, um jeweils das obere Ende und die Basis dieser Plane aufzunehmen, wobei der untere Träger (30) eine untere horizontale Nut (24) beinhaltet, die in ihrem Querschnitt eine Öffnung mit verringerter Breite aufweist, wobei die Plane (20) an ihrer Basis eine untere Wulst (26) beinhaltet, die in die untere horizontale Nut (24) eingeführt werden kann, indem sie radial durch ihre Öffnung ins Innere eingeführt wird, **dadurch gekennzeichnet, dass** das Spannplanensystem ein Sperrprofil (50) beinhaltet, das vorgesehen ist, um von einer seiner Seiten aus horizontal in die untere horizontale Nut (24) zu gleiten, nachdem die untere Wulst (26) in diese Nut eingeführt worden ist.

2. Planensystem nach Anspruch 1, **dadurch gekennzeichnet, dass** das Sperrprofil (50) einen Querschnitt beinhaltet, der eine größere Breite als jene der Öffnung der unteren horizontalen Nut (24) aufweist.

3. Planensystem nach Anspruch 1 oder 2, **dadurch gekennzeichnet, dass** das Sperrprofil (50) in seinem Querschnitt eine Lasche (52) beinhaltet, die vorgesehen ist, um durch die Öffnung der unteren horizontalen Nut (24) auszutreten.

4. Planensystem nach einem der vorstehenden Ansprüche, **dadurch gekennzeichnet, dass** das Sperrprofil (50) in seinem Querschnitt eine rohrförmige Form beinhaltet, die eine radial angeordnete Längsöffnung umfasst, die vorgesehen ist, um die untere Wulst (26) im Inneren aufzunehmen.

5. Planensystem nach einem der vorstehenden Ansprüche, **dadurch gekennzeichnet, dass** der obere Träger (2) eine obere horizontale Nut (28) beinhaltet, die eine Öffnung mit verringerter Breite aufweist, die vorgesehen ist, um eine obere Wulst (22) der Plane (20) aufzunehmen.

6. Planensystem nach Anspruch 5, **dadurch gekennzeichnet, dass** die obere Wulst (22) einen Querschnitt beinhaltet, der eine größere Breite als jene der Öffnung der oberen horizontalen Nut (28) aufweist.

7. Planensystem nach einem der vorstehenden Ansprüche, **dadurch gekennzeichnet, dass** der obere Träger (2) und der untere Träger (30) eine Vorrichtung zum horizontalen Vorspannen der Plane (20) beinhalten.

8. Planensystem nach Anspruch 7, **dadurch gekennzeichnet, dass** die Vorrichtung zum horizontalen Vorspannen einen Längsschieber (42) beinhaltet, der in eine Nut des Trägers (2, 30) eingeführt wird und eine horizontale Spannschraube (46), die sich an diesem Träger anlegt, um diesen Schieber zu verstellen.

9. Planensystem nach einem der vorstehenden Ansprüche, **dadurch gekennzeichnet, dass** es eine Vorrichtung zum vertikalen Spannen der Plane (20) beinhaltet.

10. Planensystem nach Anspruch 9, **dadurch gekennzeichnet, dass** die Vorrichtung zum vertikalen Spannen vertikale Schieber (10) beinhaltet, die zwischen einem Träger (2, 30) und festen Haltern (6) eingesetzt sind.

11. Verfahren zum Montieren einer Plane (20) eines Planensystems nach einem der vorstehenden Ansprüche, **dadurch gekennzeichnet, dass** es einen Schritt zum Einführen der unteren Wulst (26) der Plane (20) in die untere horizontale Nut (24), indem sie radial durch ihre Öffnung ins Innere eingeführt wird, und danach einen Schritt zum Längsgleiten des Sperrprofils (50) in dieser Nut beinhaltet.
